Europäisches Patentamt

European Patent Office

Office européen des brevets

(11) Publication number: **0 110 528**
**B1**

(12) **EUROPEAN PATENT SPECIFICATION**

(45) Date of publication of patent specification: **30.07.86**

(51) Int. Cl.⁴: **E 04 G 7/30**

(21) Application number: **83306158.3**

(22) Date of filing: **12.10.83**

(54) Tubular structures and joint for connecting tubular members.

(30) Priority: **13.10.82 GB 8229251**
**26.04.83 GB 8311339**

(43) Date of publication of application:
**13.06.84 Bulletin 84/24**

(45) Publication of the grant of the patent:
**30.07.86 Bulletin 86/31**

(84) Designated Contracting States:
**AT BE CH DE FR IT LI LU NL SE**

(56) References cited:
**BE-A- 566 399**
**FR-A-1 407 093**
**GB-A- 501 326**
**GB-A- 877 649**
**GB-A- 906 335**
**GB-A-1 601 897**
**GB-A-2 045 886**
**GB-A-2 065 257**
**GB-A-2 066 341**
**US-A-2 845 307**
**US-A-3 529 857**
**US-A-4 063 835**

(73) Proprietor: **J.R. COMMERCIAL ENTERPRISES LIMITED**
**10 Richfield Avenue**
**Reading Berkshire (GB)**

(72) Inventor: **Thornborrow, John W. T. K.**
**The Borrows Sandford Drive Sonning Fields**
**Woodley Reading Berkshire (GB)**
Inventor: **Deacon Paul**
**27, Balmoral Drive**
**Caversham Reading Berkshire (GB)**

(74) Representative: **Sheader, Brian N.**
**ERIC POTTER & CLARKSON 27 South Street**
**Reading Berkshire, RG1 4QU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to tubular structures and to a joint for connecting tubular members.

There are many occasions when it is desired to connect tubular members together, e.g. so that they extend at right angles to one another. Usually the tubular members are connected together by connector means such as clamping means adapted to embrace and clamp the tubular members which are to be connected together. Such connector means are usually expensive to produce and awkward in use so that it normally requires at least two people to erect a tubular structure such as a rack system for the hanging of clothes or the like.

GB—A—906,335 discloses a scaffold structure comprising slotted uprights and tubular side braces and portions of which have been flattened and notched to provide hooks adapted to engage selected slots in said uprights. Locking keys or latches are provided for retaining the notches in engagement with said slots.

US—A—4,063,835 discloses a framework having slotted upright posts and frame members having pairs of hooks at each end thereof adapted to engage a pair of slots in a said upright. Locking tabs are provided which are bent into a slot to prevent disengagement of the frame members.

The present invention has as its object to provide a tubular structure which is both simple and robust, and which obviates the need for separate and expensive connector means or locking means.

The present invention provides a tubular structure comprising a first tubular member having a plurality of aligned longitudinally-extending slots at spaced intervals along the length thereof and a second tubular member having spaced hook portions arranged to engage two longitudinally spaced slots in the first member, wherein said hook portions are formed in a flattened end portion of the second member and are a force or friction fit with the wall of the first member.

To enable the second tubular member to be mounted between two first tubular members, one or each end of the second tubular member may be so flattened and formed that the flattened end portion at at least one end of the second tubular member can be inserted into the slot or slots in the adjacent first tubular member to such an extent that the flattened end portion at the other end of the said second tubular member can be engaged with the slot or slots in the other of the first tubular members when the pair of first tubular members are spaced apart a distance at which the slots therein will be engaged by the hook portions at opposite ends of the second tubular member.

Whilst it is convenient to use tubing of circular cross-section for the first and second tubular members, it is possible to use tubing of other section. Indeed, if the second tubular member has to carry relatively large loads, it is convenient to form it from tubing of substantially elliptical cross-section. However, assuming the major axis of the tubing will be greater than the diameter of tubing of circular cross-section normally used, the elongation created by flattening the elliptical tubing parallel to the major axis thereof will mean that the two hook portions will be spaced incorrectly relative to the slots in the first tubular member if these have been standardised to accept the normal tubing of circular cross-section, and if the hook portions are formed without removing the curved and smooth transition between the two flattened tubing walls at the opposite lateral side margins of the flattened end portion. If this transition were removed, there would be a danger of the walls of the flattened end portion opening out with a consequential difficulty of engaging the slots in the first tubular member.

This problem may be obviated by forming a swage or indentation in each flattened end portion of the second tubular member whereby the lateral dimension of the flattened end portion is reduced to the required size. The hook portions can then be formed as before. Alternatively, a central and longitudinally extending slot may be formed in each flattened end portion, and then the end squeezed, either before or after the hook portions are formed, in the direction of the major axis of the tubing, again to achieve the desired dimension.

According to a preferred embodiment of the present invention the tubular structure comprises a rack assembly having a plurality of said first tubular members, e.g. arranged at four corners of the assembly, said first tubular members forming uprights of the assembly and each having two or more pluralities of slots at different angular positions, e.g., at 90° to 180° from one another, therearound, the slots of each plurality being aligned longitudinally-extending slots provided at spaced intervals along the length of the upright, and a plurality of second tubular members which form cross-members of the assembly and the hook portions of which are engaged with selected slots in said uprights to connect the uprights together. At least one cross-member may be provided, e.g., which extends between a pair of opposed intermediate uprights, which forms a hanging rail for the hanging of goods such as clothes on clothes hangers. The assembly may comprise at least one shelf supported on two or more said cross-members. The or each said shelf may be of sheet metal construction and may have a depending flange therearound which is relieved at the four corners of the shelf so that the flange can be engaged over the supporting cross-members to locate the shelf on the cross-members. The assembly may further comprise one or more cross-members which are of sheet metal construction and which are provided with hook portions at each end thereof adapted to engage the slots in said uprights. Said sheet metal cross-members may form a plinth at the bottom of the assembly and/or a lintel at the top of the assembly to improve the appearance of the assembly. Also, if desired, one or more sheet metal cross-members may be provided, e.g. at the top of the assembly, which has spaced along the length thereof laterally extending slots adapted to receive the hook portions of a said cross-member such as a cross-member which is to form a hanging rail. The or each said slotted sheet metal cross-member may have spaced at intervals along the length thereof pluralities of laterally aligned, laterally spaced and laterally extending slots adapted to receive the hook portions of a said cross-member.

The invention will be more particularly described, by way of example, with reference to the accompanying drawings in which:—

Figure 1 is a fragmentary exploded perspective view of a joint for connecting tubular members according to the present invention,

Figure 2 is a fragmentary side view of a partially formed first alternative component for the joint of Figure 1,

Figure 3 is a diagrammatic end view from the right of Figure 2,

Figure 4 is a view similar to Figure 1 but showing the component completely formed,

Figure 5 is a fragmentary side view of a partially formed second alternative component for the joint of Figure 1,

Figure 6 is a view similar to figure 5 but showing a subsequent stage of formation,

Figure 7 is a perspective view of a partly assembled tubular structure according to the present invention, and

Figure 8 is a similar perspective view of the tubular structure of Figure 7 asembled, and superimposed thereon additional components of a rack assembly shown in portions that they might occupy in the completed rack assembly, certain parts being cut away for clarity.

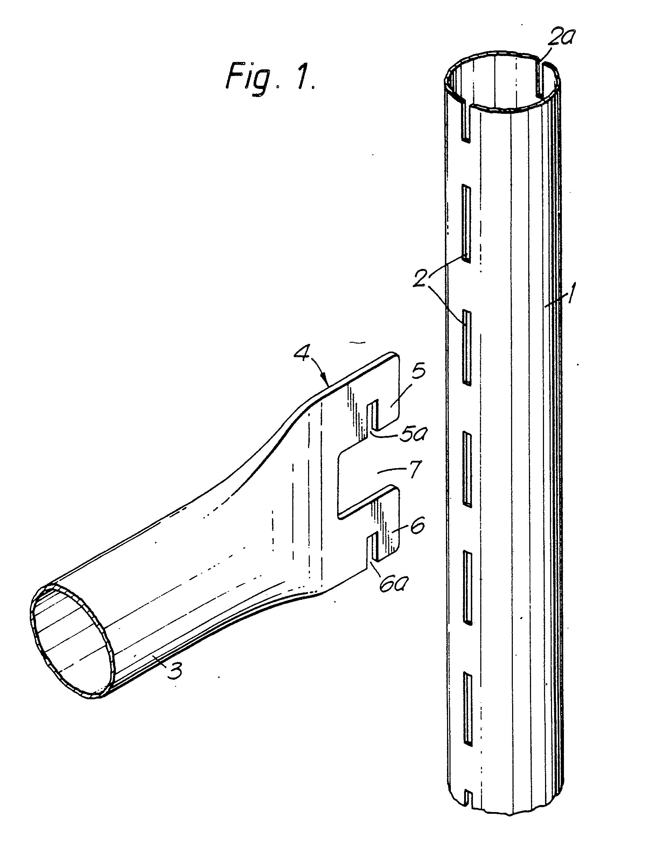

Referring to Figure 1 of the drawings, it will be seen that there is provided a first tubular member 1 of circular cross section having in the peripheral wall thereof a series of longitudinally extending slots 2 spaced along the length thereof, and a second tubular member 3 of circular cross section, an end portion 4 of which has been flattened and formed to provide a pair of spaced hook portions 5, 6 arranged to co-operate with a selected adjacent pair of slots 2 to connect the tubular members 1 and 3 together. The hook portions 5 and 6 are so dimensioned that they can be inserted into adjacent slots 2, and the slots 5a and 6a defining the hook portions 5 and 6 are of such a width that when the hook portions 5 and 6 are inserted into adjacent slots 2 and the hook portions 5 and 6 are moved downwardly in the aspect of the drawing, the slots 5a and 6a will make a force or friction fit with the wall of tubular member 1 at the lower ends of the adjacent slots 2 with which the hook portions 5 and 6 are engaged.

The end portions 4 of the tubular member 3 is preferably flattened to an extent greater than that necessary to form the hook portions 5 and 6 and the cut-out 7 between the hook portions 5 and 6 extends longitudinally of the tubular member 3 to an extent greater than that necessary to enable the hook portions 5 and 6 to engage with adjacent slots 2 in the first tubular member 1 so that the end portion 4 can be inserted into adjacent slots 2 in the tubular member 1 to an extent greater than that required to engage the hook portions 5 and 6. This enables the tubular member 3 to be engaged between a pair of tubular members 1 which are spaced apart by a distance such that they can be correctly engaged by hook portions 5 and 6 at opposite ends of the tubular member 3 without any necessity for moving the spaced tubular members 1 further apart. This facility is useful when it is desired to insert a further tubular member 3 between the pair of tubular members 1 which are already connected together by one or more tubular members 3.

If desired, the tubular member 1 may have one or more further series of spaced slots 2, e.g. as illustrated at 2a in the drawing, so as to enable the tubular members 3 to be engaged therewith at other radial positions therearound.

Also, if desired, screw or other locking means may be provided for locking the hook portions 5 and 6 in engagement with the slots 2 in the tubular member 1, although in general this will not be necessary, particularly where the hook portions 5 and 6 are in interference fit with the wall of the tubular member 1 at the bottoms of the slots 2.

The joint of the present invention is particularly applicable to tubular members of circular section which are formed from a suitable metal such as steel or aluminium although it can also be applied to tubular members wherein one or both of the tubular members is non-circular in cross-section and to tubular members which are formed from materials other than metal but which are capable of being flattened and formed to provide the hook portions 5 and 6. Thus, for example, the tubular members could be formed from a suitable plastics material.

One instance where tubular members of non-circular cross-section may be employed is where the tubular member 3 has to carry relatively large loads. In this case, it is desirable to provide the necessary load-bearing capability by using a tube of elliptical cross-section for the tubular member. However, one of the problems associated with the use of such a tube is that when the end is flattened parallel to the major axis the resulting elongation in the direction of that axis is greater than that occasioned by the flattening of a tube of circular cross-section as in Figure 1, assuming the major axis of the elliptical section tube is greater than the diameter of the circular section tube. Therefore in order to be able to standardise on the upright tubular member 1, it is necessary to vary the formation of flattened ends of tubes of elliptical cross-section used for the tubular member 3 on the basis that two hook portions 5 and 6 are to be provided as before, rather than a single hook portion.

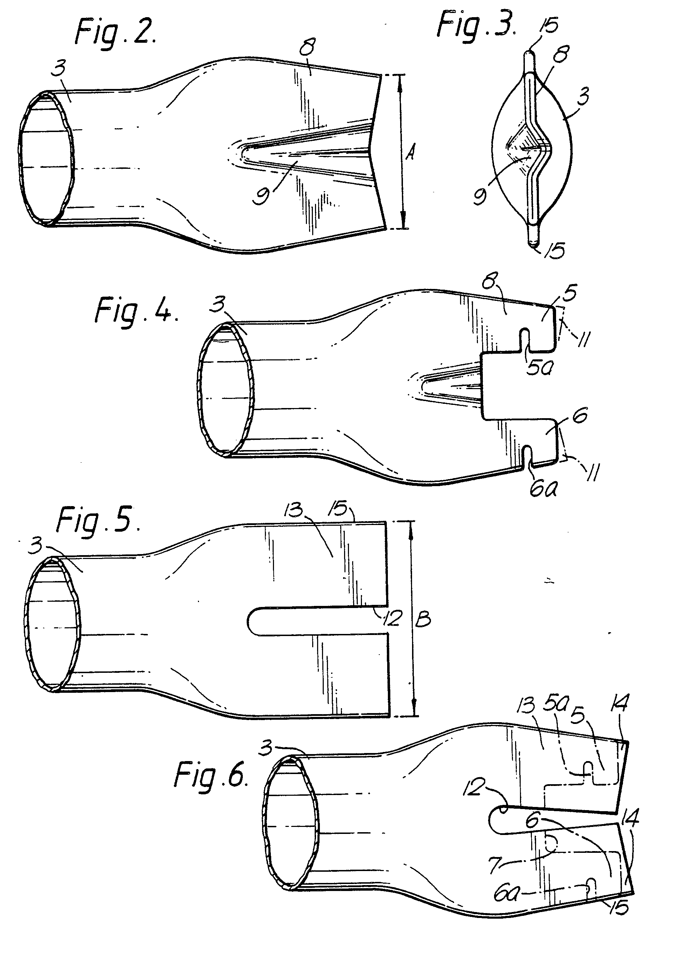

Such a tubular member 3 is shown in Figures 2 to 4 of the accompanying drawings, Figure 2 showing a partially formed flattened end portion 8. In the flattening process, a swage or indentation 9 of predetermined dimensions is formed centrally of the end portion 8, and extending longitudinally of the tubular member, the swage tapering from the end of the latter. The result of forming the swage 9 as the end portion is flattened is that the dimension A (Figure 2) is reduced to the same as the similar dimension of the tubular member 3 of Figure 1. Thus, when the hook portions 5 and 6 are formed (Figure 4) they can be received in the selected slots 2 of the standard upright tubular member 1 of Figure 1. The hook portions 5 and 6 and slots 5a and 6a are formed by stamping and it will be seen that the cut-out 7 removes the majority of the swage 9, and that the otherwise inclined outer ends 11 of the hook portions 5 and 6 are trimmed in the stamping operation.

A further alternative tubular member 3 formed from tubing of elliptical cross-section is shown in Figures 5 and 6, Figure 5 showing the member after a first stage of formation, and Figure 6 showing the member after a subsequent stage of operation. In this embodiment, no swage is formed but merely a cut-out 12 from the end of the tubular member as the end portion 13 is flattened. This means that the dimension B is too great relative to the spacing of the slot 2 on the tubular member 1 of Figure 1. Therefore, the next stage of formation is to reduce this dimension to the required size by squeezing the end portion 13 in the direction of the major axis of the tubular member 3 so that the shape of Figure 6 is achieved, this being generally similar to the overall shape of the tubular member 3 shown in Figure 4. Finally the hook portions 5 and 6, slots 5a and 6a and the cut-out 7 are formed by a stamping operation, these being shown in broken lines in Figure 6. At the same time, the otherwise inclined outer ends 14 are trimmed as in the embodiment of Figures 2 to 4.

The alternative tubular members 3 of Figures 2 to 6 are employed in precisely the same manner as the tubular member 3 of Figure 1 and, as already mentioned, are fully compatible with the upright tubular members 1, and are able to accept greater loads. In these alternatives, it will be appreciated that the curved and smooth transition 15 at opposed sides of the respective flattened end portions 8 and 13 is preserved which helps to minimise the tendency of the ends to open out which would create difficulty in engaging the hook portions 5 and 6 with the slots 2. If this were not a desirable feature, then the hook portions 5 and 6 could be stamped or otherwise formed at the required relative spacing from the flattened end portions 8 and 13 without the need for any of the extra stages of formation described.

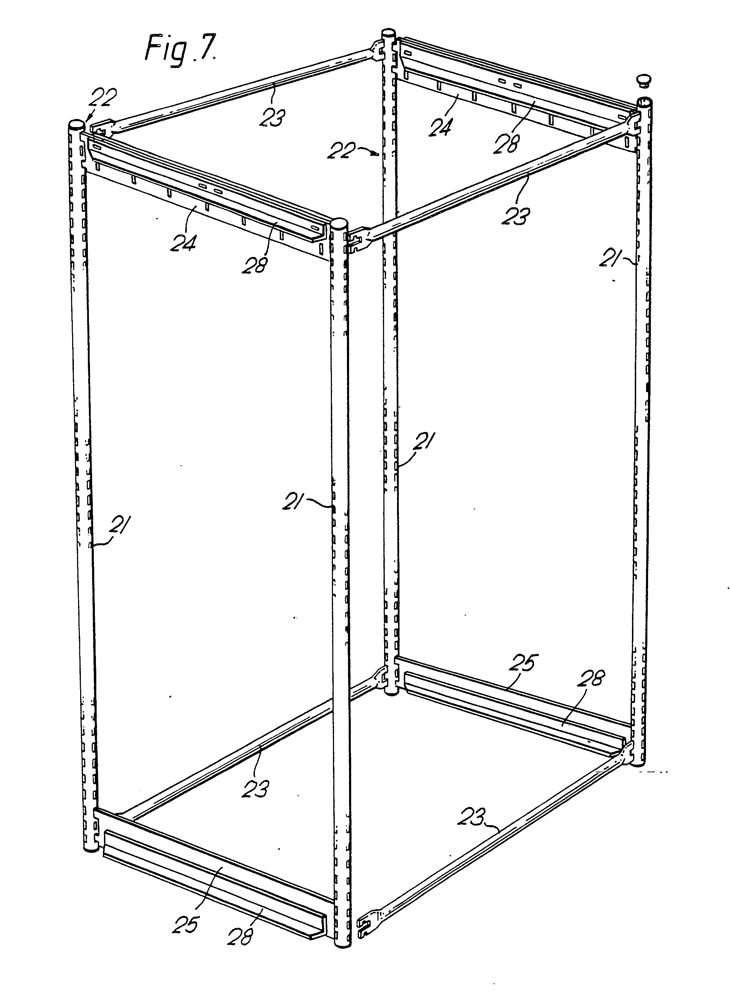

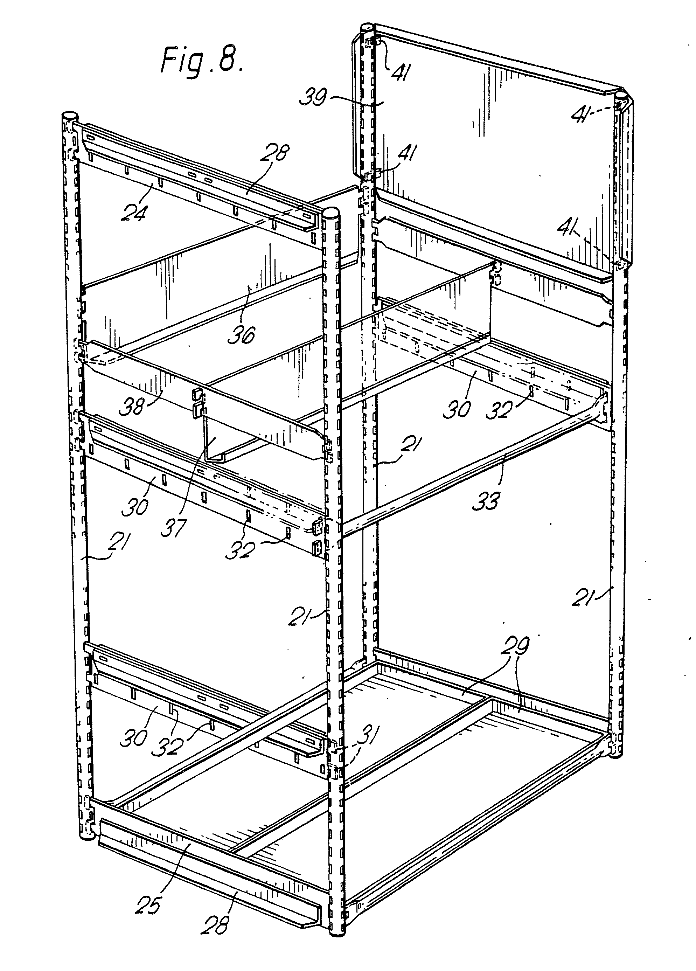

Tubular members as shown in Figures 1 to 6 and joints as shown in Figure 1 are utilised in the tubular structure shown in Figures 7 and 8.

Figure 7 shows an intermediate stage in the assembly of a rectangular structural framework for use as a modular part of a stock rack assembly in a shop, store or warehouse. The framework shown, comprising a tubular upright member 21 at each of four corners, defines one bay of the rack assembly, and is formed from two parallel rectangular end frames 22 connected by four tubular bay tie members 23 at top and bottom, front and rear.

Each end frame 22 comprises a pair of spaced apart upright members 21 connected at the top by a top frame tie 24 and at the bottom by a bottom frame tie 25. The upright members 21 are similar to the tubular member 1 of Figure 1, except that the slots 2 are in four sets at 90° angular spacing about the member. Each frame tie 24 and 25 is of sheet metal construction, and each end terminates in two spaced hook portions, formed e.g., by cutting or stamping the sheet metal, which engage the slots in the uprights 21 in like manner to the engagement of the hook portions 5 and 6 with the slots 2, as already described with reference to Figure 1.

The bay tie members 23 are similar to the tubular members 3 of Figures 1 to 6 and engage the slots in uprights 21 as the tubular members 3 engage the slots 2 in the tubular member 1.

The hook portions of the tie members 23, 24 and 25 are a force fit with the walls of the tubular uprights 21 at the ends of the slots therein, so as to form a relatively permanent (although separable when required) connection.

The top frame tie 24 and bottom frame tie 25 are provided with horizontally extending flanges 28 on each side thereof, for supporting shelves 29, as shown in Figure 8.

Adjustable support members 30, similar to the top frame ties 24 except that their hook portions are a loose fit in the slots of the uprights 21, extend between the uprights of each end frame 22 at any selected height. To enable the adjustable support members to be mounted between the uprights, their hook portions 31 can be received into the slots of one upright to such an extent that the hook portions on their other ends can be aligned with the slots of the other upright, before the hook portions at both ends are moved into engagement with their respective slots.

The top frame ties 24 and adjustable support members 30 are also provided with vertically aligned pairs of slots 32 at spaced intervals along their lengths. An adjustable tubular hanging rail 33, similar to the tubular members 3 of Figures 1 to 6, is shown engaged with opposite pairs of slots in opposite support members 30, and others can similarly be engaged with opposite pairs of slots in the uprights 21 or in the top frame ties.

Further sheet metal cross-members are provided by an adjustable shelf back 36, which extends between the two rear tubular upright members 21 at the back of the rack assembly bay, a pair of adjustable divider supports 38 each having one pair of vertically aligned slots at its mid-length, which extend between the two uprights 21 of each end frame 22, and an adjustable shelf divider 37, which extends between the pairs of slots in the divider supports. Each of these adjustable sheet metal cross-members, including the adjustable support members 30, has terminal pairs of hook portions 31 formed thereon, e.g. by cutting or stamping, identically as regards their loose engagement with the walls at the ends of the slots in the tubular upright members and in the sheet metal members and as regards the extent to which they can be inserted into the slots to allow the hook portions at the other ends of the cross-members to be aligned and engaged with their respective slots.

A further adjustable sheet metal cross-member is provided by end panel 39. This panel has an inturned flange therearound which is relieved at the four corners thereof to permit the panel to embrace the two upright members 21 of an end frame 22. Four hook members 41 are mounted on the inner face of the panel to engage slots in the upright members.

It can thus be seen that the hook portions provided in the flattened and formed end portions of the tubular members 3, 23 and 33. and the slots provided in the tubular members 1 and 21 and in the sheet metal members 24, 30 and 38 can be utilized not only for connecting the tubular members together but also for connecting the tubular members to other components provided with similarly dimensioned hook portions and slots, thus showing great versatility which is particularly useful in the construction of, for example, rack assemblies as described, utilizing tubular members which are provided with integrally formed hook portions without the need to attach further parts to make the joints.

It will readily be appreciated from a consideration of the drawings and of the preceding description that the present invention provides a joint which is both simple and robust and which enables tubular members to be readily and quickly assembled to other tubular or sheet metal members. The present invention is particularly suited to tubular structures such as rack assemblies as hereinbefore described for the hanging of clothes on clothes hangers or for similar applications where goods are suspended by hooks and/or stored on shelves but is also suited to other tubular structures such as to scaffolding.

**Claims**

1. A tubular structure comprising a first tubular member (1, 21) having a plurality of aligned longitudinally-extending slots (2) at spaced intervals along the length thereof and a second tubular member (3, 23, 33) having spaced hook portions (5, 6) arranged to engage two longitudinally spaced slots (2) in the first member, characterised in that said hook portions (5, 6) are formed in a flattened end portion (4) of the second member (3, 23, 33) and are a force or friction fit with the wall of the first member (1, 21).

2. A tubular structure according to claim 1, wherein said first tubular member (1, 21) has two or more pluralities of slots (2) at different angular positions therearound.

3. A tubular structure according to claim 2, wherein said pluralities of slots (2) are angularly displaced 90° or 180° from one another.

4. A tubular structure according to any one of the preceding claims, wherein said second tubular member (3, 23, 33) is mounted between a pair of said first members (1, 21), one or each end of the second tubular member being so flattened and formed that the flattened end portion (4) at at least one end of the second tubular member can be inserted into the slots (2) in the adjacent first member to such an extent that the flattened end portion (4) at the other end of the said second tubular member can be inserted into the slots (2) in the other of the first members when the pair of first members (1, 21) are spaced apart a distance at which the slots (2) therein will be engaged by the hook portions (5, 6) at opposite ends of the second tubular member.

5. A tubular structure according to any one of the preceding claims, wherein the flattened and formed end portion (4) of the second tubular member (3, 23, 33) has been formed by forming a swage or indentation (9) in the flattened end portions (8) to reduce the lateral dimension thereof and then forming the hook portions (5, 6).

6. A tubular structure according to any one of the preceding claims 1 to 4, wherein the flattened and formed end portion (4) of the second tubular member (3, 23, 33) has been formed by forming a central and longitudinally extending slot (12) in the flattened end portion (13) and the flattened end portion squeezed, either before or after the forming of the hook portions (5, 6) to reduce the lateral dimension of the flattened end portion.

7. A tubular structure according to any one of the preceding claims, wherein the said hook portions (5, 6) are so formed that the curved and smooth transition (15) between the two flattened tubing walls at each of the opposed lateral side margins of the flattened end portion (4) is preserved.

8. A tubular structure according to any one of claims 5 to 7, wherein said second tubular member (3, 23, 33) is substantially elliptical in cross-section and said flattened end portion (4) is flattened parallel to the major axis of said cross-section.

9. A tubular structure according to any one of the preceding claims, wherein the tubular structure comprises a rack assembly having a plurality of said first tubular members (1, 21) forming uprights of the assembly and each having two or more pluralities of slots (2) at different angular positions therearound, the slots (2) of each plurality being aligned longitudinally-extending slots provided at spaced intervals along the length of the upright, and a plurality of second tubular member (3, 23, 33) which form cross-members of the assembly and the hook portions (5, 6) of which are engaged with selected slots (2) in said uprights to connect the uprights together.

10. A tubular structure according to claim 9, comprising at least one cross-member (3, 23, 33) which forms a hanging rail for the hanging of goods.

11. A tubular structure according to claim 9 or 10, comprising at least one shelf (29) supported on two or more cross-member (3, 23, 33).

12. A tubular structure according to claim 11, wherein said shelf (29) is of sheet metal construction and has a depending flange therearound which is relieved at the four corners of the shelf so that the flange can be engaged over the supporting cross-member (3, 23, 33) to locate the shelf on the cross-members.

13. A tubular structure according to any one of the claims 9 to 12, comprising at least one cross-member (30, 38) which is of sheet metal construction and which is provided with hook portions (31) at each end thereof adapted to engage the slots (2) in the uprights (1, 21).

14. A tubular structure according to claim 13, wherein said sheet metal cross-member (30, 38) has spaced along the length thereof laterally extending slots (32) adapted to receive the hook portions (5, 6) of a said cross-member (3, 23, 33).

15. A tubular structure according to claim 14, wherein said sheet metal cross-member (30, 38) has at spaced intervals along the length thereof pluralities of laterally aligned, laterally spaced and laterally extending slots (32) adapted to receive the hook portions (5, 6) of said cross member (3, 23, 33).

**Patentansprüche**

1. Rohrkonstruktion bestehend aus einem ersten Rohrteil (1, 21), das eine Vielzahl von fluchtenden, sich längs erstreckenden Schlitzen (2) in beabstandeten Zwischenräumen entlang von dessen Länge aufweist, und einem zweiten Rohrteil (3, 23, 33), das beabstandete Hakenteile (5, 6) aufweist, die für einen Eingriff mit zwei in Längsrichtung voneinander beabstandeten Schlitzen (2) des ersten Rohrteils angeordnet sind, dadurch gekennzeichnet, daß die Hakenteile (5, 6) in einem abgeflachten Endabschnitt (4) des zweiten Rohrteils (3, 23, 33) ausgeformt sind und mit der Wand des ersten Rohrteils (1, 21) einen Festsitz oder einen Reibungssitz aufweisen.

2. Rohrkonstruktion nach Anspruch 1, dadurch gekennzeichnet, daß das erste Rohrteil (1, 21) eine zwei- oder mehrfache Vielzahl von Schlitzen (2) in dazu in Umfangsrichtung unterschiedlichen Winkelpositionen aufweist.

3. Rohrkonstruktion nach Anspruch 2, dadurch gekennzeichnet, daß die mehrfache Vielzahl von Schlitzen (2) wechselseitig mit einem Winkel von 90° oder 180° beabstandet sind.

4. Rohrkonstruktion nach einem der vorhergehenden Ansprüche, dadurch gekennzeichnet, daß das zweite Rohrteil (3, 23, 33) zwischen einem Paar der ersten Rohrteile (1, 21) montiert und ein oder jedes Ende des zweiten Rohrteils derart abgeflacht und geformt ist, daß der abgeflachte Endabschnitt (4) an wenigstens dem einen Ende des zweiten Rohrteils in die Schlitze (2) des benachbarten ersten Rohrteils in einem solchen Ausmaß eingefügt werden kann, daß der abgeflachte Endabschnitt (4) am anderen Ende des zweiten Rohrteils in die Schiltze (2) des anderen der ersten Rohrteile eingefügt werden kann, wenn das Paar der ersten Rohrteile (1, 21) in einer Entfernung voneinander beabstandet ist, in welcher ihre Schlitze (2) mit den Hakenteilen (5, 6) an den gegenüberliegenden Enden des zweiten Rohrteils in Eingriff gehalten sind.

5. Rohrkonstruktion nach einem der vorhergehenden Ansprüche, dadurch gekennzeichnet, daß der abgeflachte und geformte Endabschnitt (4) des zweiten Rohrteils (3, 23, 33) durch ein Gesenkschmieden verformt oder mit einer Materialeindrückung in dem abgeflachten Endabschnitt (8) für eine Verringerung von dessen Breitenabmessung versehen worden ist und danach die Hakenteile (5, 6) geformt werden.

6. Rohrkonstruktion nach einem der Ansprüche 1 bis 4, dadurch gekennzeichnet, daß der abgeflachte und geformte Endabschnitt (4) des zweiten Rohrteils (3, 23, 33) durch die Ausbildung eines zentralen und sich längs erstreckenden Schlitzes (12) in dem abgeflachten Endabschnitt (13) und ein Quetschen des abegflachten Endabschnittes entwender vor oder nach dem Formen der Hakenteile (5, 6) für eine Verringerung der Breitenabmessung des abgeflachten Endabschnittes verformt worden ist.

7. Rohrkonstruktion nach einen der vorhergehenden Ansprüche, dadurch gekennzeichnet, daß die Hakenteile (5, 6) derart geformt sind, daß der gekrümmte und abgerundete Übergang (15) zwischen den zwei abgeflachten Rohrwänden an jedem der beiden gegenüberliegenden Breitseitenränder des abgeflachten Endabschnittes (4) erhalten bleibt.

8. Rohrkonstruktion nach einem der Ansprüche 5 bis 7, dadurch gekennzeichnet, daß der zweite Rohrteil (3, 23, 33) einen im wesentlichen elliptischen Querschnitt aufweist und der abgeflachte Endabschnitt (4) parallel zur Hauptachse dieses Querschnitts abgeflacht ist.

9. Rohrkonstruktion nach einen der vorhergehenden Ansprüche, dadurch gekennzeichnet, daß die Rohrkonstruktion ein rahmenwerk bildet, bei dem eine Vielzahl der ersten Rohrteile (1, 21) die Ständer dieses Rahmenwerks bildet und jedes Rohrteil eine zwei- oder mehrfachr Vielzahl von Schlitzen (2) in unterschiedlichen Winkelpositionen aufweist, wobei die Schlitze (2) jeder Vielzahl entlang der Länge des jeweiligen Ständers in einer sich längs erstreckenden Ausrichtung in beabstandeten Zwischenräumen angeordnet sind, und bei dem eine Vielzahl der zweiten Rohrteile (3, 23, 33) die Querstreben des Rahmenwerks bildet, wobei die Hakenteile (5, 6) derselben mit ausgewählten Schlitzen (2) der Ständer im Eingriff gehalten sind, um die Ständer untereinander zu verbinden.

10. Rohrkonstruktión nach Anspruch 9, dadurch gekennzeichnet, daß wenigstens eine Querstrebe (3, 23, 33) vorgesehen ist, die eine Hängeschiene zum Anhängen von Gütern bildet.

11. Rohrkonstruktion nach Anspruch 9 oder 10, dadurch gekennzeichnet, daß wenigstens ein Fachboden (29) vorgesehen ist, der durch zwei oder mehr Querstreben (3, 23, 33) abgestützt ist.

12. Rohrkonstruktion nach Anspruch 11, dadurch gekennzeichnet, daß her Fachboden (29) ein Blechteil ist und einen abstehenden Flansch längs seines Umfangs aufweist, der an den vier Ecken des Fachbodens derart ausgespart ist, daß der Flansch über die abstützenden Querstreben (3, 23, 33) zum Eingriff gebracht werden kann, um damit den Fachboden an den Querstreben zu fixieren.

13. Rohrkonstruktion nach einem der Ansprüche 9 bis 12, dadurch gekennzeichnet, daß wenigstens eine Querstrebe (30, 38) vorgesehen ist, die aus einem Blechteil besteht und an jedem Ende mit Hakenteilen (31) versehen ist, die für einen Eingriff mit den Schlitzen (2) der Ständer (1, 21) angeordnet sind.

14. Rohrkonstruktion nach Anspruch 13, dadurch gekennzeichnet, daß die aus Blech bestehende Querstrebe (30, 38) entlang ihrer Länge beabstandete, sich quer erstreckende Schlitze (32) aufweist, welche zur Aufnahme der Hakenteile (5, 6) einer Querstrebe (3, 23, 33) ausgebildet sind.

15. Rohrkonstruktion nach Anspruch 14, dadurch gekennzeichnet, daß die aus Blech bestehende Querstrebe (30, 38) in beabstandeten Zwischenräumen entlang ihrer Länge mit mehreren seitlich ausgerichteten, seitlich beabstandeten und sich seitlich erstreckenden Schlitzen (32) versehen ist, die zur Aufnahme der Hakenteile (5, 6) einer Querstrebe (3, 23, 34) ausgebildet sind.

## Revendications

1. Structure tubulaire comprenant un premier élément tubulaire (1, 21) ayant une multiplicité de fentes longitudinales alignées espacées sur la longueur de l'élément, et un deuxième élément tubulaire (3, 23, 33) ayant des portions de crochet espacées (5, 6) disposées pour coopérer avec deux fentes longitudinalement espacées (2) dans le premier élément, caractérise en ce que ces portions de crochet (5, 6) sont formées dans une portion terminale aplatie (4) due deuxième élément (3, 23, 33) et sont logées de force ou à frottement dans la paroi du premier élément (1, 21).

2. Structure tubulaire selon la revendication 1, dans laquelle le premier élément tubulaire (1, 21) a deux ou plusieurs multiplicités de fentes (2) disposées à des positions angulaires différentes autour de l'élément.

3. Structure tubulaire selon la revendication 2, dans laquelle ces multiplicités de fentes (2) sont décalées angulairement de 90 ou de 180° l'une par rapport à l'autre.

4. Structure tubulaire selon l'une quelconque des revendications précédentes, dans laquelle le deuxième élément tubulaire (3, 23, 33) est monté entre deux premiers éléments (1, 21), une ou chaque extrémité du deuxième élément tubulaire étant aplatie et formée de telle sorte que la portion terminale aplatie (4) d'au moins une extrémité du deuxième élément tubulaire puisse être introduite dans les fentes (2) du premier élément adjacent d'une longueur telle que la portion terminale aplatie (4) à l'autre extrémité du deuxième élément tubulaire puisse être introduite dans les fentes (2) de l'autre premier élément lorsque les deux premiers éléments (1, 21) sont espacés de la distance à laquelle les fentes (2) de ces éléments peuvent coopérer avec les portions de crochet (5, 6) situées aux extrémités opposées du deuxième élément tubulaire.

5. Structure tubulaire selon l'une des revendications précédentes, dans laquelle la portion terminale aplatie et formée (4) du deuxième élément tubulaire (3, 23, 33) a été formée en formant une portion refoulée ou une empreinte (9) dans les portions terminales aplaties (8) pour en réduire la dimension latérale et former ensuite les portions de crochet (5, 6).

6. Structure tubulaire selon l'une quelconque des revendications 1 à 4, dans laquelle la portion terminale aplatie et formée (4) du deuxième élément tubulaire (3, 23, 33) a été formée en formant une fente centrale longitudinale (12) dans la portion terminale aplatie (13), et cette portion terminale aplatie a été resserrée, soit avant, soit après la formation des portions de crochet (5, 6) pour en réduire la dimension latérale.

7. Structure tubulaire selon l'une quelconque des revendications précédentes, dans laquelle les portions de crochet (5, 6) sont formées de telle sorte que la transition incurvée et régulière (15) entre les deux parois aplaties due tube sur chacun des bords latéraux opposés de la portion terminale aplatie (4) est conservée.

8. Structure tubulaire selon l'une quelconque des revendications 5 à 7, dans laquelle le deuxième élément tubulaire (3, 23, 33) a une section transversale pratiquement elliptique et cette portion terminale aplatie (4) est aplatie parallèlement au grand axe de l a section transversale.

9. Structure tubulaire selon l'une quelconque des revendications précédentes, cette structure comportant un ensemble de rayonnage ayant une multiplicité de premiers éléments tubulaires (1, 21) formant les montants de l'ensemble et ayant chacun deux ou plusieurs multiplicités de fentes (2) disposées tout autour dans des positions angulaires différentes, les fentes (2) des chaque multiplicité étant des fentes longitudinales alignées espacées régulièrement sur la longueur du montant, et une multiplicité de deuxièmes éléments tubulaires (3, 23, 33) qui forment des transverses de l'ensemble et dont les portions de crochet (5, 6) coopèrent avec des fentes sélectionnées (2) dans les montants pour relier ensemble ces montants.

10. Structure tubulaire selon la revendication 9, comprenant au moins une traverse (3, 23, 33) qui forme un rail de suspension pour suspendre des objets.

11. Structure tubulaire selon revendication 9 ou la revendication 10, comprenant au moins une étagère (29) supportée sur deux ou plusieurs traverses (3, 23, 33).

12. Structure tubulaire selon la revendication 11, dans laquelle l'étagère (29) est en tôle métallique et a tout autour d'elle un rebord descendant qui est dégagé aux quatre coins de l'étagère de telle sorte que ce rebord peut coopérer avec la traverse support (3, 23, 33) pour positionner l'étagère sur les traverses.

13. Structure tubulaire selon l'une quelconque des revendications 9 à 12, comprenant au moins une traverse (30, 38), qui est en tôle métallique et qui est pourvue à chacune de ses extrémités de portions de crochet (31) adaptées pour coopérer avec les fentes (2) dans les montants (1, 21).

14. Structure tubulaire selon la revendication 13, dans laquelle la traverse en tôle métallique (30, 38) comporte, espacées sur sa longueur, des fentes latérales (32) adaptées pour recevoir les portions de crochet (5, 6) d'une traverse (3, 23, 33).

15. Structure tubulaire selon la revendication 14, dans laquelle la traverse en tôle métallique (30, 38) présente, à intervalles espacés sur sa longueur, des multiplicités de fentes (32) latéralement alignées, latéralement espacées et s'étendant latéralement, adaptées pour recevoir les portions de crochet (5, 6) de la traverse (3, 23, 33).

0 110 528

Fig. 1.

Fig. 2.

3   8   9   A

Fig. 3.

15   8   3   9   15

Fig. 4.

3   8   5   11   5a   6   6a   11

Fig. 5.

3   13   15   12   B

Fig. 6.

3   13   5a   5   14   12   6   14   7   6a   15

0 110 528

Fig.7.

3

Fig. 8.